# EUROPEAN PATENT SPECIFICATION

(11) **EP 3 214 156 B1**
(45) Date of publication and mention of the grant of the patent: **12.09.2018**
(21) Application number: 16201322.1
(22) Date of filing: 30.11.2016
(51) Int. Cl.: C10J 3/30, C10J 3/72

(54) **APPARATUS FOR FEEDING SOLID BIOMASS TO A GASIFIER**
VORRICHTUNG ZUR ZUFÜHRUNG VON FESTER BIOMASSE ZU EINEM VERGASER
APPAREIL D'ALIMENTATION DE BIOMASSE SOLIDE EN UN GAZÉIFIEUR

(30) Priority: 02.03.2016 IT UB20161245
(43) Date of publication of application: 06.09.2017
(73) Proprietor: Turboden S.p.A., 25124 Brescia (IT)
(72) Inventor: BINI, Roberto, 25124 Brescia (IT); GAIA, Mario, 25124 Brescia (IT)
(74) Representative: Pes, Matteo

(56) References cited:
- US-A- 4 025 317
- US-A- 4 078 704
- US-A- 5 507 846

## Description

### Field of the invention

The present invention relates to an apparatus for feeding solid biomass to a preferably pressurized gasifier, i.e. a gasifier working with an internal pressure greater than the atmospheric pressure.

### State of the Art

The production of fuel gas from vegetable biomass is possible thanks to gasifiers, apparatuses using the pyrolysis - a phenomenon based on the splitting of long chain molecules combined with a pool of so-called gasifying reactions - in order to convert the organic materials of biomass in gases, by heating them with a presence of little oxygen amounts. The pyrolysis and the subsequent gasification reactions occur at high temperatures, mostly in the range of 300-900 °C, in the presence of an under-stoichiometric percentage of a gaseous oxidant, typically air, oxygen and/or vapor. The resulting gaseous mixture, commonly defined synthesis gas or more simply *syngas,* is a fuel gas.

More in detail, in a gasifier the biomass undergoes at least the following processes:
i) during the pyrolysis process, aeriform compounds are released such as hydrogen and methane, CO, CO₂, and a biomass carbonization is obtained, which becomes a carbonaceous biomass called *char.* Also, a not negligible percentage of tar is produced;
ii) an exothermic oxidation process occurs, since volatile products and parts of *char* react with the oxygen fed to the gasifier, thereby producing carbon-dioxide and - monoxide and generating heat, the latter being in turn necessary to sustain the subsequent gasification reactions;
iii) the gasification happens when the *char* resulting from pyrolysis reacts with carbon dioxide and water vapor or oxygen, producing carbon monoxide and hydrogen following the transformations

   C + CO₂ → 2 CO

   2C + O2 → 2CO

   2C + O2 → C + CO₂

   C + H₂O → CO + H₂

   and many other reactions constituting the gasification process;
iv) in its turn the carbon monoxide reacts with the water vapor producing an equilibrium reaction called water-gas-shift reaction:

   CO + H₂O □ CO₂ + H₂.

Practically, after the initial pyrolysis a limited amount of oxygen is introduced in the reactor, so that part of the organic material burns and produces carbon monoxide and thermal energy useful for the following reaction converting further organic material in hydrogen and additional carbon monoxide.

In the last years, gasifiers have been proposed, which can be fed with vegetable biomass such as wood, for example waste from forest pruning, or else olive residues, paper, straw, etc.

A biomass gasifier can be used for producing syngas to be fed to the combustion chamber of a gas turbine. In this circumstance, it has been found that it is convenient to use a pressurized gasifier, i.e. a gasifier working with an internal pressure greater than the atmospheric pressure. The advantage of this design is to produce syngas at a pressure, for example in the range of 1-2 MPa, compatible with the direct use in the turbine. The simplification from the plant point of view is evident.

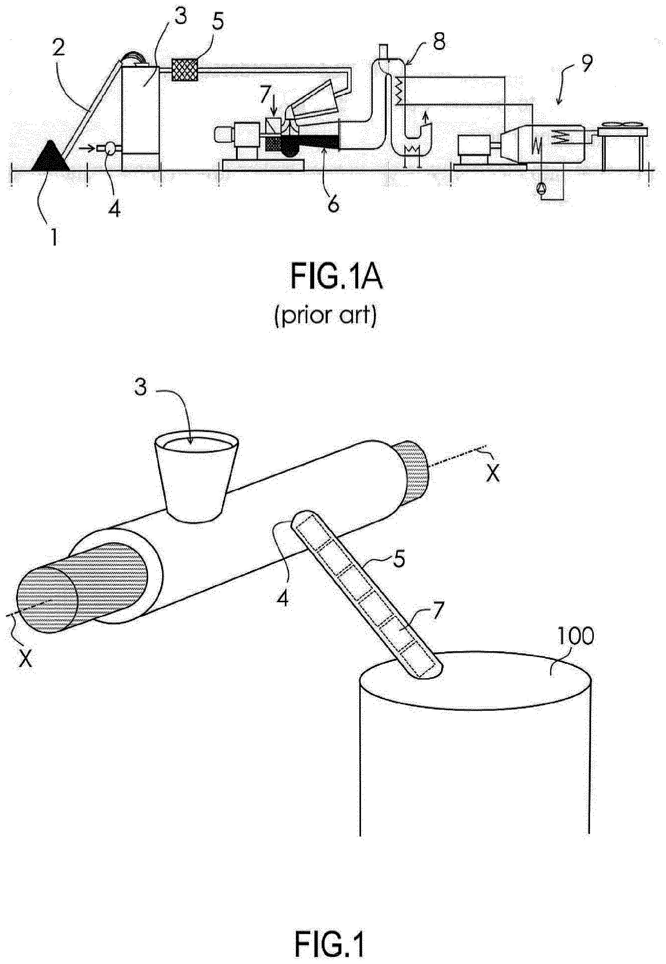

Figure 1A is a simplified scheme relative to an organic Rankine cycle (ORC) plant fed with a pressurized biomass gasifier (ASME, 3rd International Seminar on ORC Power System, October 12-14 2015, Brussels, Belgium). With the numerical reference 1 the biomass is depicted, constituted by wood chips and wastage of field or woodland cleaning, etc. A conveyor belt or an auger 2 bring the biomass to a gasifier 3 kept in overpressure, with respect to the atmospheric pressure, by an air compressor 4. The syngas produced by the pressurized gasifier 3 is cleaned in 5 and sent directly to the combustion chamber of a turbine 6, already having compatible pressure and temperature, for example 1,5 MPa and 400°C. The turbine draws air from the environment at the numeral reference 7. A heat recovery system 8 exploits the heat of the exhaust gas of the turbine to heat the organic fluid of the subjected Rankine cycle.

In order to avoid pressure unbalances in the gasifier whenever the biomass is fed, and also to avoid phenomena of atmospheric pollution, the gasifier has to be equipped with a suitable feeding apparatus assuring the pneumatic sealing, i.e. an apparatus that allows loading the biomass in the reactor of the gasifier at the same time avoiding that the gases inside the latter can leave and disperse in the atmosphere thus causing pollution. The present invention falls within the field of the apparatuses for feeding non-crushed solid biomass, i.e. not biomass of the type that can be continuously conveyed by exclusively pneumatic systems, but it relates instead to apparatuses for feeding aggregated solid biomass, for example wood chips pressed in pellets, or round straw bales, etc., that must be batch fed to the gasifier.

The feeding apparatuses currently used are only used in rotating cells (also called *rotocells*), worms, chute systems constituted by hoppers equipped with gate valves in series, or piston systems.

All of these solutions are very bulky and complex in structure.

CN 203940455U describes a complex apparatus for feeding biomass, equipped with a bucket elevator and a double gate. The use of gates can cause malfunctions: sometimes biomass residues obstruct the guides along which the gates have to move, thus limiting their travel range or inhibiting a complete closure. Therefore, it is always necessary to keep these parts internally cleaned.

The Applicant further found that some apparatuses don't assure the complete pneumatic sealing, i.e. they don't prevent one part - even if minimal - of the gas from leaving the gasifier and disperses in the atmosphere, thus causing a slight pressure loss in the gasifier. For example, the pneumatic sealing of the gates, especially in the presence of biomass residues in the sliding guides of the gates themselves, is hardly optimal.

Other apparatuses are sensitive to the quality of the loaded biomass, for example the relative content of moisture, and the granulometry. Other apparatuses don't work optimally when there are foreign bodies in the biomass, such as pieces of metal. Yet other apparatuses absorb a significant amount of energy for their operation.

Documents US 4,078,704, US 5,507,846 and US 4,025,317 disclose prior feeding apparatuses all having cylindrical structure.

### Objective and Summary of the Invention

It is a purpose of the present invention to provide an apparatus for batch feeding biomass to a gasifier, preferably a pressurized gasifier, that is simple in structure, practical, effective, and that assures the pneumatic sealing and at the same time low energy consumption.

It is a further purpose of the present invention to provide an apparatus for feeding biomass to a gasifier that also allows unloading ashes and char residue from the gasifier during maintenance works.

Therefore, the present invention concerns an apparatus according to claim 1 having the function of batch feeding biomass to a gasifier.

In particular, the apparatus comprises a casing equipped with an inlet of the biomass brought to the inlet, possibly also in bulk, by outside means such as for example a conveyor belt or a bucket elevator, and with an outlet for a biomass load towards the gasifier. The apparatus further comprises a transferring element to transfer the biomass from the inlet to the outlet of the casing; the biomass is always confined inside the casing on the way from the inlet to the outlet.

The transferring element in turn comprises a compartment to temporarily collect a corresponding quantity of biomass.

The transferring element is inserted in the casing and is movable with respect to the latter between an initial position, at which the collecting compartment is aligned with the inlet, to receive a biomass load, and a final position at which the collecting compartment is aligned with the outlet, to unload the biomass load to the gasifier.

The apparatus also comprises a compacting piston movable inside the collecting compartment, such as a piston in the relative cylinder. The compacting piston, that is preferably tightly combined with the collecting compartment, is movable between a lowered position to allow the filling of the compartment with the biomass, and a raised position, at which it exerts a pressure on the biomass contained in the compartment in order to possibly compact it until forming a pellet.

The compacting piston moves towards the raised position when the transferring element is half the way of its travel, with the collecting compartment that faces the inner surface of the casing and not the inlet or the outlet, because the latter circumstance would cause the ejection of the biomass from the collecting compartment.

The described solution shows many advantages. The structure of the apparatus is relatively simple, as it doesn't require movable gates or other complex moving parts, and however it enables to keep the loading gasifier area separated from the atmosphere. In fact, the inlet and the outlet of the casing are apart from each other. This allows avoiding that, during the biomass loading, significant pressure variations arise in the gasifier.

In the preferred embodiment, particularly suitable to provide biomass to a pressurized gasifier, the transferring element and the casing are pneumatically sealed coupled. Between the transferring element and the casing, gaskets are arranged. Preferably, the gaskets are integral with the casing and surround the inlet and the outlet. The presence of the gaskets allows effectively isolating the inlet of the casing with respect to the outlet, in the sense that the gaskets inserted in specific seats of the inner surface of the casing remain in abutment against the outer surface of the transferring element also when this moves, thus preventing the gases from reaching the interstice that there may be between the transferring element and the casing themselves. So, it is avoided that gases can leave the gasifier through the feeding apparatus and that the air could enter the gasifier without control from the outside. Preferably, when the transferring element is in the final position to unload the biomass through the outlet of the casing, the compacting piston, in the relative raised position, protrudes at least in part beyond the collecting compartment. This characteristic allows having the certainty that all of the biomass initially contained in the collecting compartment is ejected and fed to the gasifier; furthermore, the complete cleaning of the collecting compartment is achieved, and is avoided that biomass residues could get stuck between the transferring element and the gaskets, if any, or between the casing and the transferring element, when the latter is moving.

The movement of the compacting piston can be achieved by a mechanical, magnetic or pneumatic/oleodynamic actuator. For example, the compacting piston can be driven by feeding a pressurized fluid between the piston and the bottom of the collecting compartment (if the piston is equipped with sealing rings with respect to the compartment in which it slides), or by feeding a pressurized fluid in an auxiliary actuator placed between the piston and the bottom of the collecting compartment. Alternatively, the compacting piston can be driven mechanically by a screw actuator, or magnetically, for example by electromagnets drawing the piston to the raised position and the lowered one.

In the preferred embodiment, suitable for feeding a pressurized gasifier, the apparatus also comprises pressurizing means to pressurize the collecting compartment. Such means can be activated in order to balance the pressure in the collecting compartment with the pressure in the gasifier before the collecting compartment intercepts the outlet of the casing and the biomass is unloaded.

For example, the pressurizing means comprise an inflow of a pressurized gas, directly in the collecting compartment or in the casing, in an intermediate position between the inlet and the outlet, in order to intercept the collecting compartment when the transferring element moves from the initial position to the final one. The pressurizing of the collecting compartment is preferably made simultaneously to compaction of the biomass.

The apparatus according to the present invention can be arranged with the outlet of the casing directly coupled to the inlet in the reactor of the gasifier. However, the apparatus preferably comprises a duct connecting the outlet of the casing to the inlet of the gasifier; the biomass each time unloaded from the collecting compartment, compacted by the piston, piles up in the connecting duct before actually entering the gasifier. By piling up biomass in the connecting duct, the isolation of at least part of the gasifier from the feeding apparatus is practically achieved, because the biomass operates as a stopper preventing the gases from going upstream from the gasifier.

Preferably the connecting duct is cylindrical, and the ratio between the length of the latter and the hydraulic radius is greater or equal to 10. Also, the collecting compartment is preferably cylindrical in order to pile up cylindrical loads of biomass that, once ejected from the compartment, insert with minimum clearance in the connecting duct.

In an embodiment, the apparatus further comprises suctioning means operating in the collecting compartment to suction ashes and char residue from the gasifier during maintenance works. Practically, when the gasifier is turned off to make maintenance work, it is possible to align the collecting compartment with the outlet of the casing and thus in communication with the gasifier, and to activate the suctioning means in order to clean the inside of the gasifier and the connecting duct, if any, off the residual ash and char. These are piled up in the collecting compartment and can be ejected through the inlet of the casing. This allows cleaning the gasifier without dispersing ashes and char residue in the atmosphere.

In an embodiment, the apparatus further comprises a plurality of temperature sensors placed at corresponding points inside the apparatus itself. A controller is designed for acquiring signals generated from said sensors, processing them and generating an alarm signal if the detected temperatures are compatible with the condensation formation. This allows the plant manager to control the process in order to avoid generating condensation.

The casing and the transferring element are spherical and the transferring element rotates in the casing between the initial and final positions.

In this solution, that can be defined having spherical structure, the seals or gaskets are circular and flat and are preferably housed in corresponding annular seats obtained in the inner surface of the casing. A first seal surrounds the collecting compartment of the biomass, and a second seal surrounds a wider area also comprising the first seal. It is preferable that the plane on which the seals lie is not a diametric plane so that to minimize the volume isolated by the seals themselves.

Thanks to the just described expedient it is possible to isolate an inner volume from the seals definitely lower than what is possible to achieve by the first variant provided with cylindrical casing and transferring element.

A rotary movement of the transferring element inside the casing is provided, to bring each time the collecting compartment to the position provided for in order to achieve the above described results. However, the transferring element also makes swinging movements around at least one axis orthogonal to the main rotation axis (i.e. the axis around which the transferring element rotates so that the collecting compartment faces the openings of the casing), with respect to the casing, in order to avoid that the seals are always insisting on the same surfaces thus creating furrows; practically, the swinging movement helps to achieve a uniform wear of the surfaces that come in contact, i.e. the seals and the outer surface of the transferring element. The swinging motion is preferably modest in amplitude, in order to avoid increasing the diameter of the sealing rings. Preferably the amplitude, expressed as total rotation angle, is lower than 5 sexagesimal degrees and anyway not higher than 10 degrees. The motion of the transferring element with respect to the casing can also be according to nutation modes, with the same limits suggested above. Furthermore, the swinging or nutation motion preferably will have variable frequency or at least, if fixed, it won't be multiple of the main rotation frequency, still with the purpose of avoiding falling back in the same furrows in the contact between gaskets and sphere.

### Brief Description of the Drawings

However, further details of the invention will be evident from the following description made with reference to the attached figures, in which:
- figure 1A is a schematic view of an organic Rankine cycle (ORC) plant fed with a pressurized biomass gasifier;
- figure 1 is a perspective and schematic view of a first embodiment of an apparatus not according to the present invention combined with a biomass gasifier;
- figures 2 to 10 are schematic views, in partial section, of a second embodiment of an apparatus not according to the present invention, shown in corresponding arrangements during the its operation;
- figure 11 is a schematic perspective view of a first component of an embodiment of the apparatus according to the present invention;
- figure 12 is a schematic and front view of the component shown in figure 11;
- figure 13 is a partial sectional view of a second component of the apparatus according to the present invention;
- figures 14-16 are schematic and perspective views of the first component shown in figure 11, wherein possible movements are shown;
- figure 17 shows a detail of a further embodiment of an apparatus according to the present invention.

### Detailed Description of the Invention

Figure 1A has been commented in the paragraph related to the known art.

Figure 1 shows an apparatus 1 not according to the present invention, combined with a gasifier 100 that in general can be pressurized or not, and operate at atmospheric pressure.

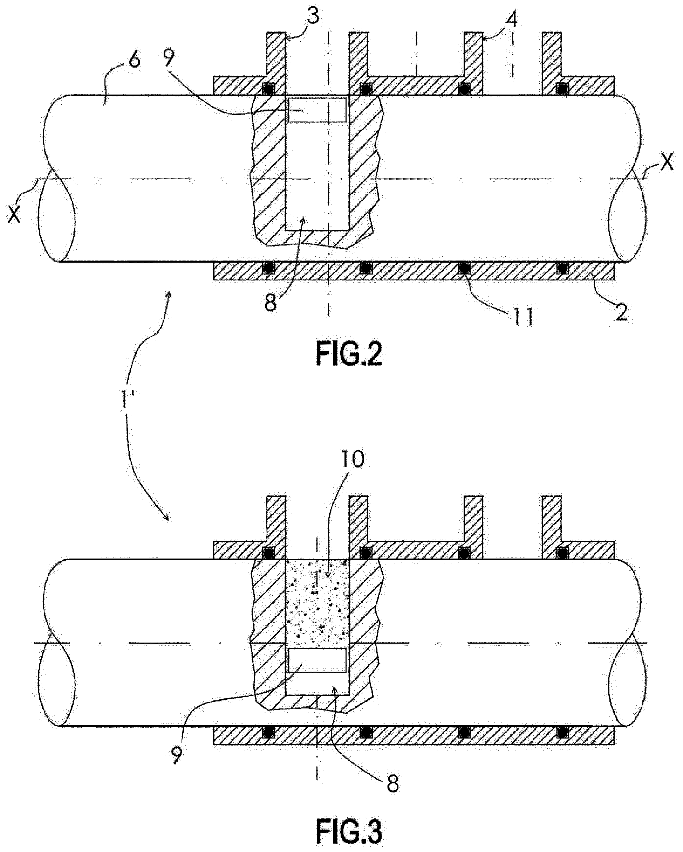

In figure 2 the apparatus 1 comprises a casing 2, in this example cylindrical, whose longitudinal axis is depicted with X-X. The casing 2, for example made of steel, is equipped with a biomass inlet 3, for example a hopper fed by a conveyor belt (not shown) conveying wood chips, straw, wastage of sawmill or carpentry, etc. An outlet 4 is open on the side of the casing 2 and is connected to the gasifier 100 by means of a duct 5. The connecting duct 5 is optional, meaning that the outlet 4 from the casing could be directly connected to the gasifier.

Inside the casing there is a transferring element 6, whose function will be explained more in detail with reference to other figures. In the example shown in figure 1, the transferring element 6 is translatable and rotatable in the casing 2 with which a coupling with tight tolerances is achieved, i.e. with minimum clearances allowing the relative movement without possibly using a lubricant or using small amounts of the latter.

The biomass can be batch fed already aggregated, or in bulk, to the inlet 3 of the casing 2. From the outlet 4 the biomass exits in batch, for example in aggregated heaps 7, or in pellets, possibly tablets.

Figures 2 to 10 schematically show an apparatus 1' similar to the apparatus 1 of figure 1, but that compared to this differs in that the inlet 3 and the outlet 4 are shown on the same plane and not angularly offset. However, the design shown in figure 1 is preferable because the unloading of the biomass heaps 7 from the outlet 4 is eased by the force of gravity.

The transferring element 6 shown in figure 1 translates and rotates with respect to the casing 2; the transferring element 6 shown in figures 2-10 translates only with respect to the casing 2.

The transferring element, in this example being cylindrical too, comprises a collecting compartment 8 to collect the biomass. The compartment 8 is a blind hole extending orthogonally with respect to the axis X-X and opening at the outer surface of the transferring element 6.

As described above, the transferring element 6 is movable with respect to the casing 2.

In particular, the travel of the transferring element 6 is such that in an initial position the collecting compartment 8 is aligned with the inlet 3 and can receive biomass, for example by gravity, and in a final position the collecting compartment 8 is aligned with the outlet 4 to unload the biomass towards the gasifier 100.

A plurality of seals 11 defines corresponding "stations" during the travel of the transferring element 6. The seals 11 are circular and each surround the transferring element 6, i.e. runs along the entire circumference defined by the inner surface of the casing 2. The seals prevent the gas from leaving through the interstice, albeit small, between the transferring element 6 and the casing 2. Preferably, the seals are metal or ceramic.

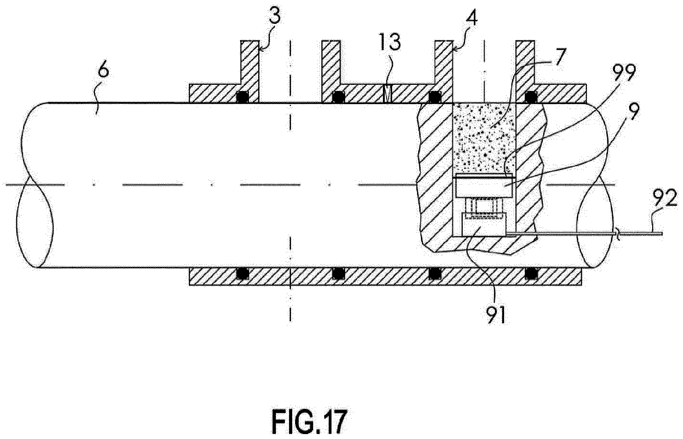

In figure 2 the apparatus is shown with the transferring element 6 in the initial position, ready to receive biomass. A piston 9, defined as compacting piston, is inserted in the collecting compartment 8 and slides inside it. Preferably, a sealing gasket is provided between the piston and the collecting compartment depicted with the numeral reference 99 in figure 17. The operation of the piston 9 will be now described in detail.

In figure 3 the apparatus is shown in a condition in which some biomass 10 in bulk has been inserted in the collecting compartment 8 and the piston 9 is moved back towards the bottom of the compartment 8.

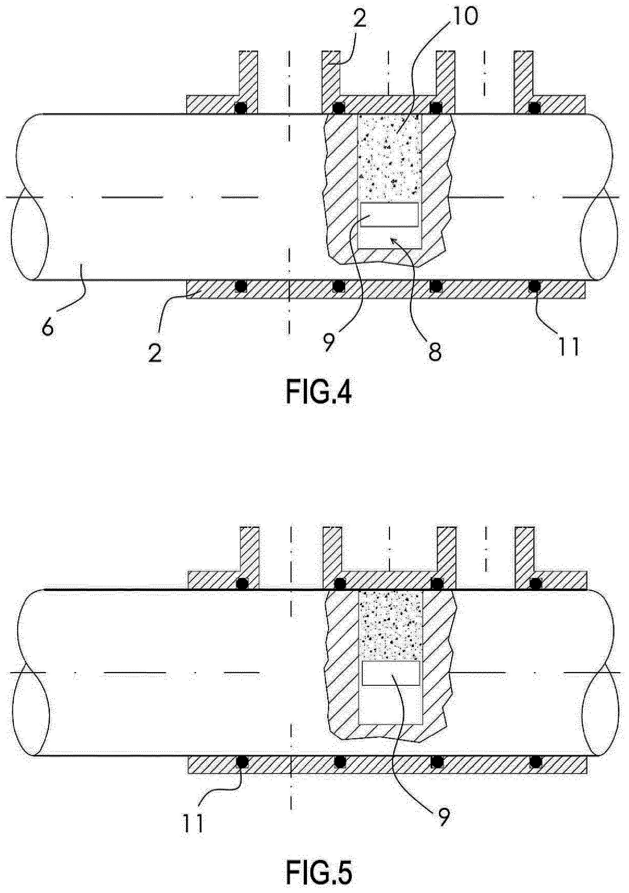

Figure 4 shows the apparatus 1' with the transferring element in an intermediate position with respect to the initial position and the final position. In this intermediate position, the biomass 10 cannot leave from the collecting compartment 8 because the compartment 8 is closed at the top by the inner surface of the casing 2. As it can be noted by observing the figure, the collecting compartment 8 is intermediate between two seals 11 which confine a corresponding environment.

Figure 5 shows the apparatus with the transferring element 6 in an intermediate position, as in figure 4, but with the difference that the compacting piston 9 is pushed upward, i.e. towards the outlet of the collecting compartment 8. The movement of the piston 9 allows compacting the biomass 10 trapped in the collecting compartment 8.

The compacting piston 9 can be driven by a mechanical actuator, for example gears or a screw, or pneumatically or oleodynamically, by feeding compressed air between the piston 9 itself and the bottom of the collecting compartment 8, if the piston 9 is provided with sealing gasket as explained above, or again by feeding a pressurized fluid (air or oil) in an auxiliary actuator placed between the piston and the bottom of the collecting compartment, as shown in figure 17, or by using one or more magnets.

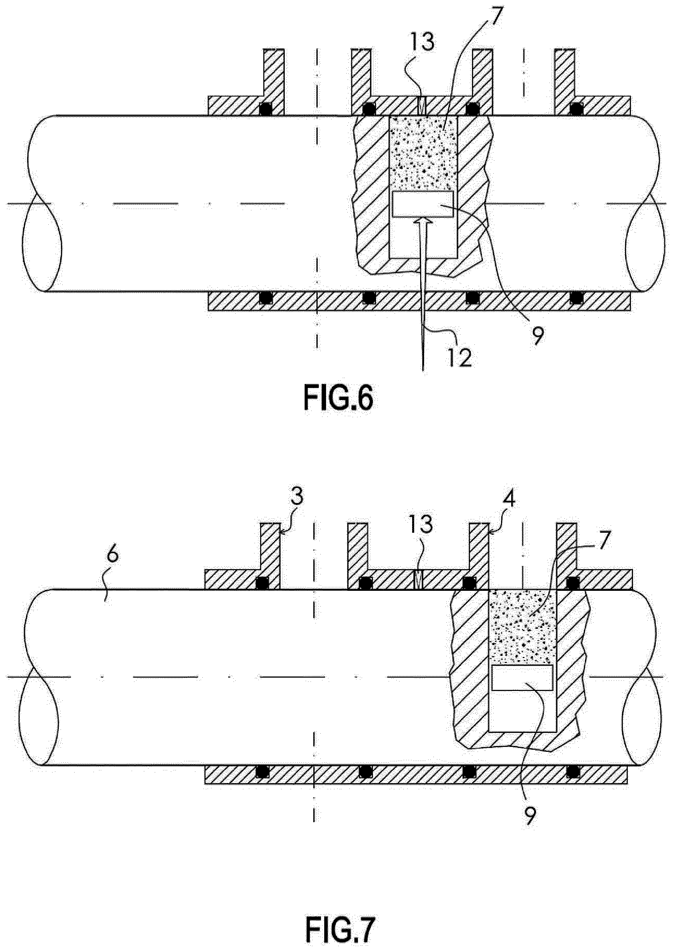

In figure 6 the actuator of the compacting piston 9 is schematically depicted by the arrow 12. In figure 17 the drive is delegated to a pneumatic or oleodynamic actuator 91 fed through a duct 92 (that can be extended to second the movements of the transferring element 6) from an outer pressure source (not shown). Going back to figure 6, here the piston 9 has completed its travel and compacted the biomass as much as possible, that now have taken the shape of an aggregated heap 7. A pressurized gas is inserted in the collecting compartment 8 by means of a nozzle 13. The pressurized gas can be, for example, depleted air, nitrogen, carbon dioxide, exhaust gas of internal combustion engines or boilers, exhaust gas of turbines, or also syngas drawn off the gasifier 100, etc. Thanks to this expedient, it is possible to lead the pressure in the collecting compartment 8 equal to the pressure the biomass will meet once unloaded from the outlet 4, i.e. equal to the pressure in the gasifier 100 or in the connecting duct 5. The seals 11 assure maintaining the pressure in the collecting compartment 8.

In this way, it is possible feeding a pressurized gasifier 100 without subjecting it to stresses due to sudden pressure gradients during the loading of the biomass. Obviously, the apparatus 1, 1' is also usable for feeding non-pressurized gasifiers.

Figure 7 shows the apparatus 1 with the transferring element 6 in the final position. The collecting compartment 8 is aligned with the outlet 4 and the biomass heap 7 is ready to be ejected by the piston 9. Going back to the example of figure 7, it can be appreciated how the seals 11 prevent possible gases returning from the gasifier from "escaping" towards the inlet 3 through the interstice between the casing 2 and the transferring element 6.

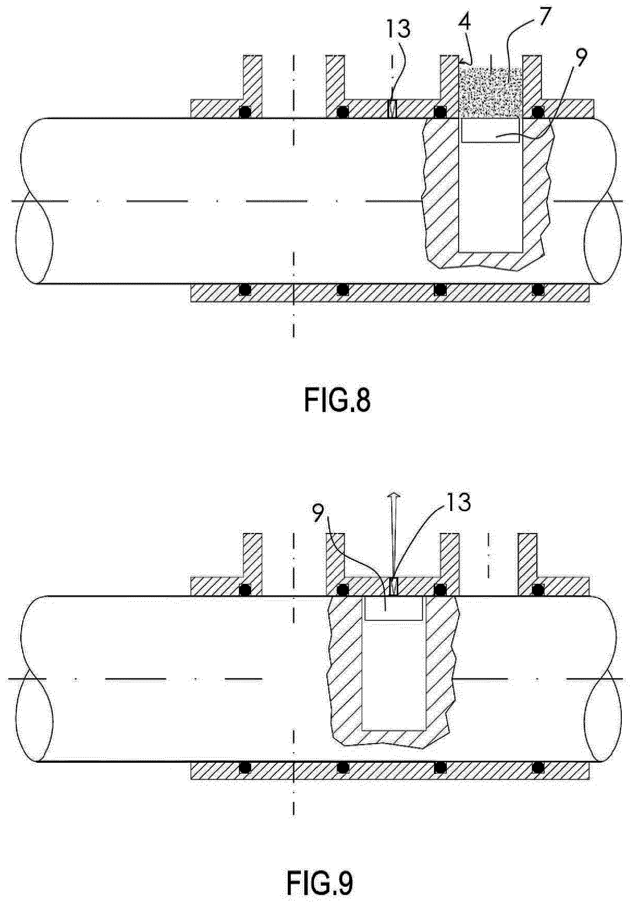

Figure 8 shows the apparatus 1' that has unloaded a biomass heap 7 through the outlet 4. The compacting piston 9 has been pushed towards the relative upper stop to eject the compacted biomass heap 7 and clean the inner walls of the collecting compartment 8.

Even if it is not shown in figure 8, the piston 9 can be pushed at least in part into the outlet 4, i.e. beyond the edge of the collecting compartment 8 in order to have the assurance that biomass residues don't remain blocked between the casing 2 and the transferring element 6, close to the seals 11.

The heaps 7 unloaded by the apparatus 1' can arrive directly to the gasifier 100 or, as shown in the example of figure 1, can be piled up in the connecting duct 5 in order to constitute a kind of stopper preventing the rising of the gases from the gasifier and to have a reserve of heaps 7 immediately available for the gasifier 100.

Once a heap 7 has been unloaded, the apparatus 1 brings back the transferring element 6 to the initial position for a new operation cycle.

As shown in figure 9, during the return travel of the transferring element 6 towards the initial position, the same is stopped in the intermediate position to unload, gradually and in a controlled manner, in the atmosphere the possible overpressure by means of the nozzle 13.

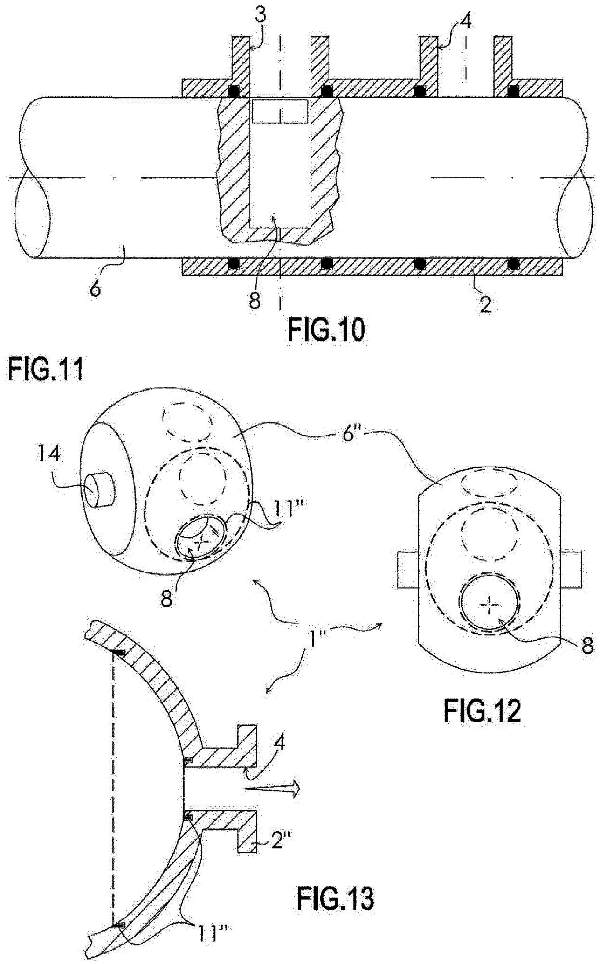

Figure 10 shows the apparatus 1 in the position shown in figure 2, ready for a new biomass load.

Figures 11-13 refer to an embodiment 1", substantially spherical, of the apparatus according to the present invention. The transferring element 6" is rotating, on pins 14, with respect to the casing 2". Also in this case, the collecting compartment 8 is a blind hole. The seals 11" are circular and are not arranged on the biggest circle of the casing, i.e. they are not on the diametric plane, so that to minimize the volume between the two seals 11".

Preferably, the transferring element 6" is also subjected to nutation movements with respect to the casing 2" to uniform the wear of the seals 11" and of the outer surface of the transferring element 6" itself.

Figures 11-13 show the transferring element 6" in the final position, with the compartment 8 facing the outlet 4. The two positions, initial and intermediate, on the transferring element 6" are also depicted by dashed line.

The operation of the apparatus 1" is equivalent to the operation of the other two examples.

Also, the apparatus 1" is equipped with a compacting piston movable in the collecting compartment 8.

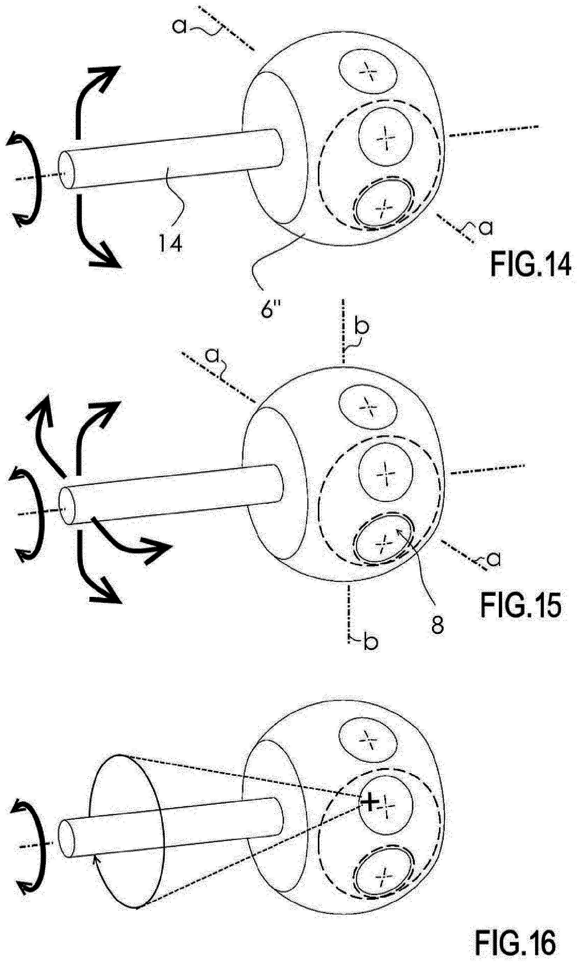

As shown in figures 14-16, the transferring element 6" is subjected to swinging or nutation movements inside the casing, anyway modest in entity, for example lower than 10°. The reason, as explained above, lies in the fact that we wish to avoid the gaskets 11 from interacting with the outer surface of the transferring element 6" always in the same positions, and from extending to create furrows that could compromise the pneumatic sealing.

he swinging or nutation movements are achieved by rotating the transferring element 6" around the axis a-a shown in figure 14, or around the axes a-a and b-b shown in figure 15, simultaneously with the movement imparted along the axis of the pin 14. The result, schematically shown in figure 16, is to move the transferring element 6" until a nutation is achieved, for example a circular or elliptical nutation.

In general, the apparatuses 1, 1' and 1" can be fed with biomass already packed in bags. Preferably, the transferring element 6, 6" is finished with hardened areas or with abrasion-resistant built-up material, at least in the proximity of the entry edge of the collecting compartment 8. Similarly, also the casing 2, 2" preferably comprises hardened or built-up areas (chemical, thermal, treatments etc.) at the inlet 3 and the outlet 4.

Preferably, the apparatus 1, 1', 1" comprises a plurality of temperature sensors and a controller collecting their signals and processing them to report the possibility of condensation formation inside the apparatus itself.

In general, the apparatus 1, 1', 1" is also usable to make the cleaning of the gasifier 100 and the connecting duct 5, if any, during maintenance work. For example, a door connected to a suction pump can be arranged in the collecting compartment 8, so that when the compartment 8 faces the outlet 4, the pump can suction the gases contained in the gasifier and the duct 5; the gases drag ash and char residue to remove them from the surfaces and pile them up just in the collecting compartment 8, from which they can be ejected exactly as it happens for the biomass, but from the inlet 3.

Another interesting aspect of the maintenance work of the gasifier 100 consists in the possibility of closing the outlet 4, and thus the duct 5 or directly the inlet of the gasifier 100, with a stopper. In fact, a stopper can be inserted in the collecting compartment 8 through the inlet 3 of the apparatus 1, 1', 1". By using the apparatus as explained above for transferring the biomass, the stopper can be carried at the outlet 4 and pushed by the piston 9 until the closure of the passage is achieved. In this way, the gasifier 100 is isolated.

Alternatively to the stopper, it is possible to equip the duct 5 with a gate valve. Preferably, in case the connecting duct 5 is provided, the latter is cylindrical and is characterized by the ratio between the its length and the hydraulic radius greater or equal to 10.

In general, the apparatus 1, 1', 1" allows loading biomass at ambient pressure from a traditional feeding circuit, such as an auger or a conveyor belt, transferring the biomass to the gasifier without substantial loss of gas and possibly pressurizing the transfer environment with air or other inert fluid in order to avoid to subject the gasifier, if pressurized, to transient pressure.

In a not shown embodiment, the compaction of the biomass 10 in the collecting compartment is made by an outside piston inserting, precisely from the outside, in the compartment 8. In this variant, the transferring element 6 moves with respect to the casing 2 until exposing the collecting compartment 8 to the outside, where there is the outside piston, and then introducing again the collecting compartment 8 with the compacted biomass into the casing 2.

The proposed solution is particularly suitable for feeding biomass to pressurized gasifiers associated to combined cycles with gas turbine and organic Rankine cycle (ORC).

## Claims

1. Batch feeding apparatus (1') to batch feed biomass to a gasifier (100), comprising a casing (2) equipped with an inlet (3) of the biomass provided by outside means, and with an outlet (4) of the biomass towards the gasifier (100) and a transferring element (6) to transfer the biomass from said inlet (3) to said outlet (4), wherein the transferring element (6) is provided with a collecting compartment (8) to temporarily collect the biomass, and wherein the transferring element (6) is inserted in the casing (2) and is movable with respect to the latter between an initial position, at which the collecting compartment (8) is aligned with said inlet (3) to receive a biomass load (10), and a final position at which the collecting compartment (8) is aligned with said outlet (4) to unload the biomass to the gasifier (100), **characterized by** comprising a compacting piston (9) movable in the collecting compartment (8) between a lowered position and a raised position in order to compact the biomass (10) loaded in the collecting compartment (8) and/or to eject it from the collecting compartment (8),
wherein gaskets (11), preferably integral with the casing (2), are arranged between the transferring element (6) and the casing (2),
**characterized in that** the casing (2") and the transferring element (6") are spherical and the transferring element (6") rotates in the casing (2") between the initial and final positions, and
**in that** the transferring element (6") rotates in the casing (2") also with swinging or nutation movements in order to achieve a uniform wear of the gaskets (11") and surfaces contacting the latter.

2. Apparatus (1') according to claim 1, wherein the transferring element (6) and the casing (2) are pneumatically sealed coupled.

3. Apparatus (1') according to any one of preceding claims 1-2, wherein the compacting piston (9) is provided with at least one gasket that assures the sealing with the collecting compartment (8).

4. Apparatus (1') according to any one of preceding claims 1-3 wherein, when the transferring element (6) is in the final position for unloading the biomass through the outlet (4) the compacting piston (9), which is in the raised position, protrudes at least in part beyond the collecting compartment (8).

5. Apparatus (1') according to any one of preceding claims 1-4, wherein the compacting piston (9) is driven with one of the following modes:
- mechanically, by an actuator, or
- magnetically, for example by electromagnets drawing the piston (9) to the raised position and the lowered one, or
- pneumatically or oleodynamically, by feeding a pressurized fluid between the piston (9) and the bottom of the collecting compartment (8), or
- by means of a pneumatic or hydraulic actuator (91) interposed between the compacting piston (9) and the bottom of the collecting compartment (8), wherein the actuator is in turn fed with a pressurized fluid provided by an outside source.

6. Apparatus (1') according to any one of preceding claims 1-5, comprising pressurizing means (13) to pressurize the collecting compartment (8), which can be activated in order to balance the pressure in the collecting compartment (8) with the pressure in the gasifier (100) before the biomass is unloaded.

7. Apparatus (1') according to claim 6, wherein the pressurizing means (13) comprise an inflow of pressurized gas, directly in the collecting compartment (8) or in the casing (2), in an intermediate position between the inlet (3) and the outlet (4), in order to intercept the collecting compartment (8) when the transferring element (6) moves from the initial position to the final one.

8. Apparatus (1') according to any one of preceding claims 1-7, further comprising a duct (5) connecting the outlet (4) of the casing (2) to the inlet of the gasifier (100), wherein the biomass each time unloaded from the collecting compartment (8) piles up in the connecting duct (5) before actually entering the gasifier (100), thereby isolating at least partially the gasifier (100) from the feeding apparatus (1').

9. Apparatus (1') according to claim 8, wherein the collecting compartment (8) is cylindrical and the connecting duct (5) is cylindrical too, and the ratio between the length of the latter and the hydraulic radius is greater or equal to 10.

10. Apparatus (1') according to any one of preceding claims 1-9, further comprising suctioning means operating in the collecting compartment to suction ashes and char residue from the gasifier during maintenance works.

11. Apparatus (1') according to any one of preceding claims 1-9, further comprising a plurality of temperature detecting sensors at corresponding points inside the apparatus itself, and a controller designed for acquiring signals generated from said sensors, processing them and generating an alarm signal if the detected temperatures are compatible with the condensation formation.

12. Apparatus (1") according to any one of preceding claims 1-11, wherein the gaskets (11") are circular and flat and preferably lie on a non-diametric plane of the casing (2") and of the transferring element (6").

13. Apparatus (1") according to any claim 1-12, wherein the swinging or nutation movements have a size lower than 10°.

## Patentansprüche

1. Chargenzuführvorrichtung (1') zum chargenweisen Zuführen von Biomasse zu einem Vergaser (100), umfassend einen Gehäuse (2) mit einem Einlass (3) für die durch äußere Mittel bereitgestellte Biomasse und mit einem Auslass (4) für die Biomasse in Richtung des Vergasers (100), und ein Überführungselement (6) zum Überführen der Biomasse von dem Einlass (3) zu dem Auslass (4), wobei das Überführungselement (6) mit einem Sammelraum (8) zum vorübergehenden Sammeln der Biomasse versehen ist, und wobei das Überführungselement (6) in das Gehäuse (2) eingeordnet ist und gegenüber diesem zwischen einer Ausgangsstellung, in der der Sammelraum (8) zu dem Einlass (3) fluchtend ausgerichtet ist, um eine Biomasseladung (10) aufzunehmen, und einer Endposition, in der der Sammelraum (8) zu dem Auslass (4) fluchtend ausgerichtet ist, um die Biomasse in den Vergaser (100) zu entladen, bewegbar ist, **gekennzeichnet durch** das Vorsehen von einem in dem Sammelraum (8) zwischen einer abgesenkten Stellung und einer angehobenen Stellung bewegbaren Verdichtungskolben (9) zum Verdichten der Biomasse (10), die in den Sammelraum (8) geladen wurde und/oder aus dem Sammelraum (8) auszustoßen ist, wobei zwischen dem Überführungselement (6) und dem Gehäuse (2) Dichtungen (11) angeordnet sind, die vorzugsweise einstückig mit dem Gehäuse (2) ausgebildet sind,
**dadurch gekennzeichnet, dass** das Gehäuse (2") und das Überführungselement (6") kugelförmig ausgebildet sind und das Überführungselement (6") sich in dem Gehäuse (2") zwischen der Anfangs- und der Endposition dreht, und dass das Überführungselement (6") sich auch mit Schwenk- oder Nutationsbewegungen in dem Gehäuse (2") dreht, um einen gleichmäßigen Verschleiß der Dichtungen (11") und der mit diesen in Kontakt stehenden Flächen zu erreichen.

2. Vorrichtung (1') nach Anspruch 1, wobei das Überführungselement (6) und das Gehäuse (2) pneumatisch dicht zusammengekoppelt sind.

3. Vorrichtung (1') nach einem der vorhergehenden Ansprüche 1 bis 2, wobei der Verdichtungskolben (9) mit zumindest einer Dichtung versehen ist, die die Abdichtung mit dem Sammelraum (8) gewährleistet.

4. Vorrichtung (1') nach einem der vorhergehenden Ansprüche 1 bis 3, wobei, bei sich in der Endposition befindliches Überführungselement (6) zum Entladen der Biomasse durch den Auslass (4), der in der angehobenen Stellung befindliche Verdichtungskolben (9) zumindest teilweise über den Sammelraum (8) hinausragt.

5. Vorrichtung (1') nach einem der vorhergehenden Ansprüche 1 bis 4, wobei der Verdichtungskolben (9) mit einem der folgenden Modi angetrieben wird:
- mechanisch, durch einen Aktuator, oder
- magnetisch, beispielsweise durch Elektromagnete, die den Kolben (9) in die angehobene Position und die abgesenkte Position anziehen, oder
- pneumatisch oder öldynamisch, indem zwischen dem Kolben (9) und dem Boden des Sammelraums (8) ein Druckfluid zugeführt wird, oder
- mittels eines pneumatischen oder hydraulischen Aktuators (91), der zwischen dem Verdichtungskolben (9) und dem Boden des Sammelraums (8) vorgesehen ist, wobei der Aktor wiederum mit einem von einer Außenquelle bereitgestellten Druckfluid gespeist wird.

6. Vorrichtung (1') nach einem der vorhergehenden Ansprüche 1 bis 5, umfassend Druckmittel (13) zum Druckbeaufschlagen des Sammelraums (8), die zum Ausgleich des Drucks im Sammelraum (8) mit dem Druck in dem Vergaser (100), bevor die Biomasse entladen wird, aktivierbar sind.

7. Vorrichtung (1') nach Anspruch 6, wobei die Druckmittel (13) einen Zufluss von Druckgas direkt in den Sammelraum (8) oder in das Gehäuse (2) in einer Zwischenstellung zwischen dem Einlass (3) und dem Auslass (4) umfassen, um den Sammelraum (8) abzufangen, wenn sich das Überführungselement (6) von der Ausgangsposition in die Endposition bewegt.

8. Vorrichtung (1') nach einem der vorhergehenden Ansprüche 1 bis 7, ferner umfassend eine den Auslass (4) des Gehäuses (2) mit dem Einlass des Vergasers (100) verbindende Leitung (5), wobei die jeweils aus dem Sammelraum (8) entladene Biomasse sich in der Verbindungsleitung (5) vor dem eigentlichen Eintritt in den Vergaser (100) ansammelt, wodurch der Vergaser (100) zumindest teilweise gegenüber der Zuführvorrichtung (1') isoliert wird.

9. Vorrichtung (1') nach Anspruch 8, wobei der Sammelraum (8) zylindrisch ist und die Verbindungsleitung (5) ebenfalls zylindrisch ist, und das Verhältnis zwischen dessen Länge und dem hydraulischen Radius größer oder gleich 10 ist.

10. Vorrichtung (1') nach einem der vorhergehenden Ansprüche 1 bis 9, ferner umfassend im Sammelraum arbeitende Absaugmittel zum Absaugen von Asche und Kohlerückstand aus dem Vergaser bei Wartungsarbeiten.

11. Vorrichtung (1') nach einem der vorhergehenden Ansprüche 1 bis 9, ferner umfassend eine Mehrzahl von Temperaturerfassungssensoren an entsprechenden Stellen innerhalb der Vorrichtung selbst, und eine Steuerung, die dazu ausgebildet ist, von den Sensoren erzeugte Signale zu erfassen und zu verarbeiten und ein Alarmsignal zu erzeugen, wenn die erfassten Temperaturen mit der Kondensationsbildung kompatibel sind.

12. Vorrichtung (1") nach einem der vorhergehenden Ansprüche 1 bis 11, wobei die Dichtungen (11") kreisförmig und flach sind und vorzugsweise auf einer nicht diametralen Ebene des Gehäuses (2") und des Überführungselement (6") liegen.

13. Vorrichtung (1") nach jedem der Ansprüche 1 bis 12, wobei die Schwenk- oder Nutationsbewegungen eine Größe kleiner als 10° aufweisen.

## Revendications

1. Appareil d'alimentation par lots (1') pour alimenter biomasse par lots à un gazéifieur (100), comprenant une enveloppe (2) équipée d'une entrée (3) de la biomasse fournie par des moyens extérieurs, et d'une sortie (4) de la biomasse vers le gazéifieur (100) et un élément de transfert (6) pour transférer la biomasse de ladite entrée (3) à ladite sortie (4), où l'élément de transfert (6) est muni d'un compartiment collecteur (8) pour collecter temporairement la biomasse, et où l'élément de transfert (6) est inséré dans l'enveloppe (2) et est mobile par rapport à celle-ci entre une position initiale, dans laquelle le compartiment collecteur (8) est aligné avec ladite entrée (3) pour recevoir une charge de biomasse (10), et une position finale dans laquelle le compartiment collecteur (8) est aligné avec ladite sortie (4) pour décharger la biomasse vers le gazéifieur (100), **caractérisé en ce qu'**il comprend un piston de compactage (9) mobile dans le compartiment collecteur (8) entre une position abaissée et une position relevée afin de compacter la biomasse (10) chargée dans le compartiment collecteur (8) et/ou de l'expulser du compartiment collecteur (8),
où des joints (11), de préférence intégrés à l'enveloppe (2), sont disposés entre l'élément de transfert (6) et l'enveloppe (2),
**caractérisé en ce que** l'enveloppe (2") et l'élément de transfert (6") sont sphériques et l'élément de transfert (6") tourne dans l'enveloppe (2") entre les positions initiale et finale, et
**en ce que** l'élément de transfert (6") tourne dans l'enveloppe (2") également avec des mouvements d'oscillation ou de nutation afin d'obtenir une usure uniforme des joints (11") et des surfaces en contact avec ces derniers.

2. Appareil (1') selon la revendication 1, dans lequel l'élément de transfert (6) et l'enveloppe (2) sont couplés de manière pneumatiquement étanche.

3. Appareil (1') selon l'une quelconque des revendications précédentes 1-2, dans lequel le piston de compactage (9) est équipé d'au moins un joint qui assure l'étanchéité avec le compartiment collecteur (8).

4. Appareil (1') selon l'une quelconque des revendications précédentes 1-3, dans lequel, lorsque l'élément de transfert (6) est dans la position finale pour décharger la biomasse à travers la sortie (4), le piston de compactage (9), qui est dans la position relevée, dépasse au moins en partie au-delà du compartiment collecteur (8).

5. Appareil (1') selon l'une quelconque des revendications précédentes 1-4, dans lequel le piston de compactage (9) est entraîné par un des modes suivants:
- mécaniquement, par un actionneur, ou
- magnétiquement, par exemple au moyen d'électro-aimants qui attirent le piston (9) en position relevée et en position abaissé, ou
- pneumatiquement ou oléodynamiquement, en alimentant un fluide sous pression entre le piston (9) et le fond du compartiment collecteur (8), ou
- au moyen d'un actionneur pneumatique ou hydraulique (91) interposé entre le piston de compactage (9) et le fond du compartiment collecteur (8), dans lequel l'actionneur est à son tour alimenté avec un fluide sous pression fourni par une source extérieure.

6. Appareil (1') selon l'une quelconque des revendications précédentes 1-5, comprenant des moyens de pressurisation (13) pour pressuriser le compartiment collecteur (8), qui peuvent être activés afin d'équilibrer la pression dans le compartiment collecteur (8) avec la pression dans le gazéifieur (100) avant que la biomasse ne soit déchargée.

7. Appareil (1') selon la revendication 6, dans lequel les moyens de mise sous pression (13) comprennent un afflux de gaz sous pression, directement dans le compartiment collecteur (8) ou dans l'enveloppe (2), dans une position intermédiaire entre l'entrée (3) et la sortie (4), afin d'intercepter le compartiment collecteur (8) lorsque l'élément de transfert (6) se déplace de la position initiale à la position finale.

8. Appareil (1') selon l'une quelconque des revendications précédentes 1-7, comprenant en outre un conduit (5) reliant la sortie (4) de l'enveloppe (2) à l'entrée du gazéifieur (100), dans lequel la biomasse chaque fois déchargée du compartiment collecteur (8) s'accumule dans le conduit de raccordement (5) avant d'entrer effectivement dans le gazéifieur (100), isolant ainsi au moins partiellement le gazéifieur (100) de l'appareil d'alimentation (1').

9. Appareil (1') selon la revendication 8, dans lequel le compartiment collecteur (8) est cylindrique et le conduit de raccordement (5) est également cylindrique, et le rapport entre la longueur de ce dernier et le rayon hydraulique est supérieur ou égal à 10.

10. Appareil (1') selon l'une quelconque des revendications précédentes 1-9, comprenant en outre des moyens d'aspiration fonctionnant dans le compartiment collecteur pour aspirer les cendres et les résidus de carbonisation du gazéifieur pendant les travaux de maintenance.

11. Appareil (1') selon l'une quelconque des revendications précédentes 1-9, comprenant en outre une pluralité de capteurs de détection de température en points correspondants à l'intérieur de l'appareil lui-même, et un contrôleur conçu pour acquérir des signaux générés par lesdits capteurs, les traiter et générer un signal d'alarme si les températures détectées sont compatibles avec la formation de condensation.

12. Appareil (1") selon l'une quelconque des revendications précédentes 1-11, dans lequel les joints (11") sont circulaires et plats et reposent de préférence sur un plan non diamétral de l'enveloppe (2") et de l'élément de transfert (6"').

13. Appareil (1") selon l'une quelconque des revendications 1-12, dans lequel les mouvements d'oscillation ou de nutation ont une dimension inférieure à 10°.
